# EUROPEAN PATENT APPLICATION

(11) **EP 4 837 996 A1**
(43) Date of publication of application: **11.11.2026**
(21) Application number: 26151088.7
(22) Date of filing: 09.01.2026
(51) Int. Cl.: C25B 1/04, C25B 9/23, C25B 11/031, C25B 11/053, H01M 4/86

(54) **ELECTRODE AND MEMBRANE ELECTRODE ASSEMBLY**

(30) Priority: 09.05.2025 JP 2025078853
(71) Applicant: KABUSHIKI KAISHA TOSHIBA, Kawasaki-shi, Kanagawa (JP)
(72) Inventor: YOSHINAGA, Norihiro, Kawasaki-shi (JP); FUKAZAWA, Taishi, Kawasaki-shi (JP); SUGANO, Yoshitsune, Kawasaki-shi (JP); ONO, Akihiko, Kawasaki-shi (JP)
(74) Representative: Marks & Clerk LLP

(57) **Abstract**

An electrode according to an embodiment includes a first support, and a first catalyst layer provided on the first support, the first catalyst layer having a plurality of alternately stacked sheet layers and gap layers. A side of the first catalyst layer opposite the first support defines a first region and a region of the catalyst layer other than the first region defines a second region. Either an average thickness of the gap layers located in the first region is greater than an average thickness of the gap layers located in the second region or the thickest gap layer having the thickest thickness among the gap layers is located in the first region, or both.

## Description

### FIELD

Embodiments described herein relate generally to an electrode, a membrane electrode assembly, an electrochemical cell, a stack, and an electrolyzer.

### BACKGROUND

In recent years, electrochemical cells have been intensively studied. Among electrochemical cells, for example, solid polymer electrolyte water-electrolysis cells (PEMEC: Polymer Electrolyte Membrane Electrolysis Cell) are expected to be used for large-scale energy-storage systems to generate hydrogen. In order to secure sufficient durability and electrolysis characteristics, noble-metal catalysts such as platinum (Pt) nanoparticles are generally used as cathode catalysts in PEMEC, and iridium (Ir) nanoparticles are generally used as anode catalysts. In addition, methods for obtaining hydrogen from ammonia are being investigated. Moreover, the anode of an electrolyzer that electrolyzes carbon dioxide to produce organic compounds such as methanol or ethylene, or carbon monoxide, can also be utilized.

### BRIEF DESCRIPTION OF THE DRAWINGS

FIG. 1 is a schematic diagram of an electrode according to an embodiment;
FIG. 2 is a partial schematic cross-sectional diagram of an electrode according to an embodiment;
FIG. 3 is a partial schematic cross-sectional diagram of an electrode according to an embodiment;
FIG. 4 shows analysis spots according to an embodiment;
FIG. 5 is a schematic diagram of a membrane electrode assembly according to an embodiment;
FIG. 6 is a schematic cross-sectional diagram of a membrane electrode assembly according to an embodiment;
FIG. 7 is a schematic diagram of an electrochemical cell according to an embodiment;
FIG. 8 is a schematic diagram of a stack according to an embodiment;
FIG. 9 is a conceptual diagram of an electrolyzer according to an embodiment;
FIG. 10 is a table of examples.

### DETAILED DESCRIPTION

An electrode according to an embodiment includes a first support, and a first catalyst layer provided on the first support, the first catalyst layer having a plurality of alternately stacked sheet layers and gap layers. A side of the first catalyst layer opposite the first support defines a first region and a region of the catalyst layer other than the first region defines a second region. Either an average thickness of the gap layers located in the first region is greater than an average thickness of the gap layers located in the second region or the thickest gap layer having the thickest thickness among the gap layers is located in the first region, or both.

Hereinafter, referring to the drawings, the embodiments of the present invention will be described in detail.

In the following description, the same elements are assigned the same reference numerals, and elements that have been described once may be omitted where appropriate.

Physical values in the specification are values measured at 25 °C and 1 atm. The thickness of each component is the average distance in the stacking direction.

The thickness and structure of members described in the specification can be known, for example, from one or more of images obtained by SEM (Scanning Electron Microscope), TEM (Transmission Electron Microscope), HAADF-STEM (High-Angle Annular Dark Field Scanning Transmission Electron Microscopy), and the like. The boundaries of the members described in the specification can be determined from one or more images obtained by scanning electron microscopy or transmission electron microscopy, SEM-EDS (Scanning Electron Microscopy with Energy Dispersive X-ray Spectroscopy) or TEM-EDX (Transmission Electron Microscopy with Energy Dispersive X-ray Spectroscopy), SIMS (Secondary Ion Mass Spectrometry), and the like. The composition of the members described in the specification can be determined by one SIMS, ICP-MS (Inductively Coupled Plasma Mass Spectrometry), SEM-EDX, TEM-EDX, or the like. The crystallinity of the members described in the specification can be evaluated, for example, from XRD (X-ray Diffraction), EBSD (Electron Backscatter Diffraction), images obtained by HAADF-STEM, SEM, TEM or the like. Materials included in the members described in the specification (crystal defects, bonding states, etc.) can be evaluated from HAADF-STEM, PL (Photoluminescence), XPS (X-ray Photoelectron Spectroscopy), or the like. These analysis methods are examples and do not negate the specific analytical methods described in the specification.

### (FIRST EMBODIMENT)

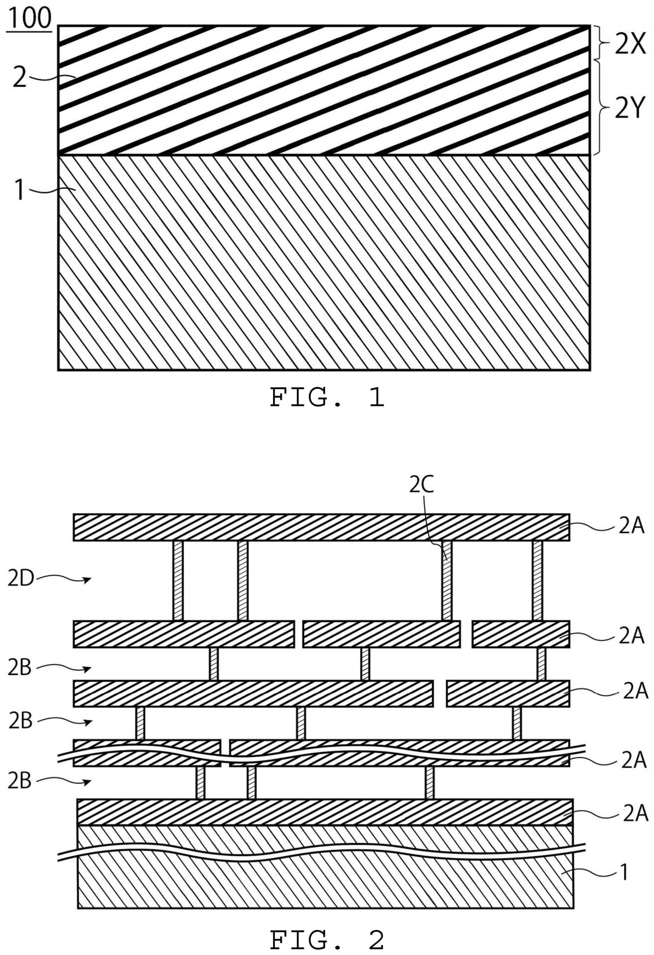

The first embodiment relates to an electrode. FIG. 1 shows a schematic cross-sectional diagram according to an embodiment electrode 100. The electrode 100 comprises a support (first support) 1 and a catalyst layer (first catalyst layer) 2. The catalyst layer 2 is provided on the support 1.

In the embodiments, the catalyst layer 2 is used as an electrolysis catalyst. The electrolysis reaction, for example, generates hydrogen from water or from ammonia. The electrolysis reaction, for example, generates carbon monoxide from carbon dioxide. The catalyst layer 2 is also used as an anode catalyst for ammonia electro-generation.

The electrode 100 of the first embodiment can, for example, be used as an anode for water electrolysis. When the catalyst layer 2 further includes a fuel-cell catalyst, the electrode 100 of the embodiment can also be used as an oxygen electrode of a fuel cell. The electrode 100 of the embodiment can also be used as an anode for ammonia electro-generation. The electrode 100 of the embodiment can be used as an anode of an electrolyzer for ammonia synthesis. Below, water electrolysis will be described as an example for the first embodiment and other embodiments, but in addition to water electrolysis, for example, ultra-pure water can be supplied to the anode, water is decomposed at the anode to generate protons and oxygen, the generated protons pass through the electrolyte membrane, and nitrogen supplied to the cathode combines with the protons and electrons to generate ammonia; in such a case the anode of a membrane electrode assembly can utilize the electrode 100 of the embodiment. The electrode 100 of the embodiment can also be used as a cathode that electrolyzes ammonia to generate hydrogen. The electrode of the embodiment can be used as a cathode of a hydrogen-producing device. Below, water electrolysis will be described as an example for the first embodiment and other embodiments, but in addition to water electrolysis, for example, ammonia can be supplied to the cathode, ammonia is decomposed at the cathode to generate protons and nitrogen, the generated protons pass through the electrolyte membrane, and at the anode the protons and electrons combine to generate hydrogen; in such a case the cathode of a membrane-electrode assembly can utilize the electrode 100 of the embodiment.

As the support 1, it is preferable to use a material that is porous and has high electrical conductivity. The support 1 is a porous member through which gas or liquid can pass.

The support 1 includes metal fibers or metal particles. It is preferable that the support 1 includes metal fibers of valve metal or metal particles of valve metal. The metal fibers and metal particles may be plated.

When the support 1 includes the metal fibers, a fabric that includes the metal fibers is preferable. A fabric that includes the metal fibers may be a metal-fiber mesh or a metal-fiber non-woven fabric.

When the support 1 includes metal particles, a sintered body in which the metal particles are agglomerated is preferable. The metal particles are preferably stacked in the thickness direction of the support 1.

The metal fibers preferably include one or more metals selected from the group consisting of titanium (Ti), aluminum (Al), tantalum (Ta), niobium (Nb), hafnium (Hf), zirconium (Zr), zinc (Zn), tungsten (W), bismuth (Bi), and antimony (Sb). It is more preferable that the metal fibers include titanium. It is even more preferable that the metal fibers are fibers of titanium.

The fiber diameter of the metal fibers is preferably 1 µm or more and 500 µm or less. Considering reactivity and conductivity, it is more preferable that the fiber diameter of the metal fibers is preferably 1 µm or more and 100 µm or less. The average diameter (average diameter) of the metal fibers is preferably 1 µm or more and 500 µm or less. Considering reactivity and conductivity, it is more preferable that the average diameter of the metal fibers is more preferably 1 µm or more and 100 µm or less.

The metal particles preferably include one or more metals selected from the group consisting of Ti, Al, Ta, Nb, Hf, Zr, Zn, W, Bi, and Sb. It is more preferable that the metal particles include titanium. It is even more preferable that the metal particles are particles of titanium.

The primary particle size (diameter) of the metal particles is preferably 1 µm or more and 500 µm or less. Considering reactivity and conductivity, it is more preferable that the primary particle size of the metal particles is 1 µm or more and 100 µm or less. The average primary particle size (average diameter) of the metal particles is preferably 1 µm or more and 500 µm or less. Considering reactivity and conductivity, it is more preferable that the average primary particle size of the metal particles is 1 µm or more and 100 µm or less.

The support 1 is a conductive porous member. Considering material transfer, the porosity of the support 1 is preferably 20 vol% or more and 95 vol% or less, and more preferably 40 vol% or more and 90 vol% or less.

The catalyst layer 2 is provided on the support 1. An intermediate layer (not shown) may be provided between the catalyst layer 2 and the support 1. It is preferable that the catalyst layer 2 is in direct contact with the support 1 (the catalyst layer 2 is in direct contact with the metal fibers and/or the metal particles) .

The catalyst layer 2 preferably includes one or more elements selected from the group consisting of Ir, Ru, Pt, Pd, Ni, Co, Mn, Fe, Cu, V, Au, Cr, Sr, Y, Ag, Sn, Mo, Ti, Al, Ta, Nb, Hf, Zr, Zn, W, Bi, and Sb. The catalyst layer 2 preferably includes oxides including one or more elements selected from the group consisting of Ir, Ru, Pt, Pd, Ni, Co, Mn, Fe, Cu, V, Au, Cr, Sr, Y, Ag, Sn, Mo, Ti, Al, Ta, Nb, Hf, Zr, Zn, W, Bi, and Sb.

The catalyst layer 2 preferably includes at least one oxide of a first element selected from the group consisting of Ir, Ru, Pt, and Pd. The first catalyst layer 2 includes one or more first elements selected from the group consisting of Ir, Ru, Pt, and Pd. It is preferable that the catalyst layer 2 includes Ir.

It is preferable that the catalyst layer 2 is porous. The porosity of the catalyst layer 2 is preferably 10 vol% or more and 90 vol% or less, and more preferably 30 vol% or more and 70 vol% or less.

The amount (total amount) of noble metal in the catalyst layer 2 is preferably 0.01 mg/cm² or more and 1.0 mg/cm² or less, more preferably 0.03 mg/cm² or more and 0.5 mg/cm² or less, and still more preferably 0.04 mg/cm² or more and 0.1 mg/cm² or less. This mass amount can be measured by ICP-MS.

The thickness of the catalyst layer 2 is preferably 0.1 µm or more and 2 µm or less, and more preferably 0.15 µm or more and 1 µm or less.

The side of the catalyst layer 2 opposite the support 1 is defined as a first region 2X, and the region of the catalyst layer 2 other than the first region 2X (i.e., the side adjacent to the support 1) is defined as a second region 2Y.

The first region 2X and the second region 2Y are arranged in the stacking direction of the support 1 and the catalyst layer 2. The first region 2X is a layer-shaped region within the catalyst layer 2. The second region 2Y is also a layer-shaped region within the catalyst layer 2.

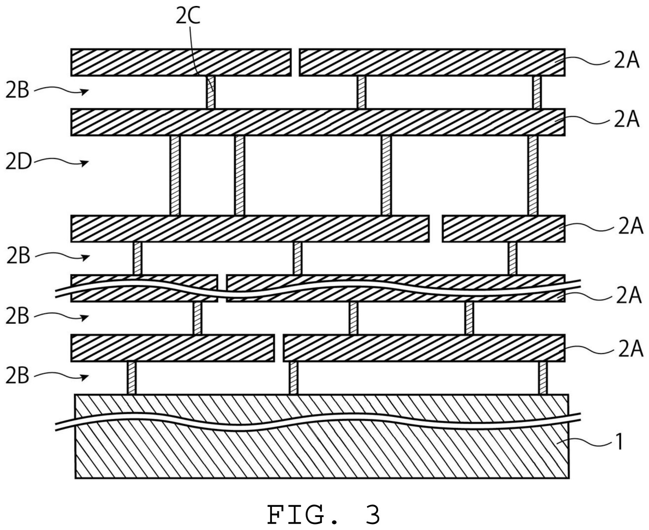

It is preferable that the catalyst layer 2 has a structure in which sheet layers 2A and gap layers 2B are alternately stacked. The schematic cross-sectional diagrams of the electrode portion shown in FIG. 2 and FIG. 3 illustrate the stacked structure of the catalyst layer 2 provided on the support 1. The sheet layers 2A and the gap layers 2B are stacked substantially parallel to each other. The gap layers 2B are mostly voids, but in some parts the sheet layers 2A protrude and become connected. The sheet layers 2A are connected by columnar members (pillars) 2C that exist in the gap layers 2B, thereby maintaining the stacked structure. The difference between the schematic diagram of FIG. 2 and that of FIG. 3 is whether the layer existing on the side of the support 1 is a sheet layer 2A (FIG. 2) or a gap layer 2B (FIG. 3). In the drawings, the sheet layers 2A are partially discontinuous sheets, but continuous sheets are also acceptable.

The alternating stacked structure of the sheet layers 2A and the gap layers 2B can also be identified from the contrast of layers in a cross-sectional SEM image of the catalyst layer 2.

The sheet layers 2A are layers in which catalyst particles that are not supported on carriers (for example, metal-oxide catalyst particles) are densely aggregated in a sheet-like manner. The sheet layers 2A also contain some voids. The sheet layers 2A are dense layers that include many catalyst particles.

It is preferable that the sheet layers 2A contain an oxide of the first element.

The gap layers 2B are the regions sandwiched between the sheet layers 2A and include catalyst particles that are not supported (for example, metal-oxide particles). Unlike the sheet layers 2A, the gap layers 2B do not have a regular structure of catalyst particles. For example, the gap layers 2B may be regions that do not include sheet-like agglomerates of unsupported metal-oxide particles. The gap layers 2B are located between the sheet-like agglomerates of metal-oxide in the sheet layers 2A. In some cases the constituent elements may differ, the gap layers 2B have a lower density of catalyst particles than the sheet layers 2A. Columnar members 2C exist in the gap layers 2B. The columnar members 2C, which are formed by agglomerated unsupported metal-oxide particles, extend in the stacking direction of the sheet layers 2A and the gap layers 2B and connect the sheet layers 2A.

It is preferable that the gap layers 2B include the oxide of the first element.

The gap layer 2D having the thickest thickness among the gap layers 2B is included in the first region 2X. Hereinafter, when the term "gap layers 2B" is used without qualification, it refers to the entirety of the gap layers 2B that includes the gap layer 2D having the thickest layer.

The average thickness of one sheet layer 2A (average of the thicknesses of all sheet layers 2A) is preferably 10 nm or more and 200 nm or less, more preferably 10 nm or more and 100 nm or less, still more preferably 10 nm or more and 50 nm or less, and even more preferably 10 nm or more and 24 nm or less.

The average porosity of the sheet layers 2A is preferably 5 vol% or more and 75 vol% or less, more preferably, 10 vol% or more and 50 vol% or less, and still more preferably 10 vol% or more and 30 vol% or less.

The average thickness of the gap layers 2B (average of the thicknesses of all gap layers 2B) is preferably 5 nm or more and 200 nm or less, more preferably 5 nm or more and 100 nm or less, and still more preferably 5 nm or more and 50 nm or less.

The average thickness of the gap layers 2B that located in the first region 2X is preferably 1 nm or more and 25 nm or less, more preferably 2 nm or more and 15 nm or less, and still more preferably 2 nm or more and 10 nm or less.

The average thickness of the gap layers 2B that located in the second region 2Y is preferably 1 nm or more and 20 nm or less, more preferably 2 nm or more and 15 nm or less, and still more preferably 2 nm or more and 10 nm or less.

It is preferable that the average thickness of the gap layers 2B in the first region 2X is thicker than the average thickness of the gap layers 2B in the second region 2Y. The average thickness of the gap layer 2B in the first region 2X is greater than the average thickness of the gap layer 2B in the second region 2Y, and it is preferable that the gap layer 2D having the thickest layer among the gap layers 2B is included in the first region 2X. The average thickness of the gap layers 2B in the first region 2X is preferably 1.1 times or more and 8 times or less than the average thickness of the gap layers 2B in the second region 2Y, and more preferably 1.5 times or more and 4 times or less.

The thickness of the first region 2X, which is located on the side of the catalyst layer 2 opposite the support 1, is preferably 10 % or more and 30 % or less of the thickness of the first catalyst layer, and more preferably 10 % or more and 20 % or less. Even when degradation of the catalyst structure occurs during electrolysis operation using the electrode 100, the first region 2X and/or the gap layer 2D enable control such that the degradation occurs in the first region 2X (for example, at the gap layer 2D), thereby reducing the impact of degradation on the electrode 100. When the catalyst layer 2 peels away from the support 1, the surface of the support 1 becomes exposed and the electrical conductivity between the support 1 and the catalyst layer 2 may decrease. During electrolysis operation, pressure is applied in the direction where the catalyst layer 2 contacts the support 1, so the support 1 and the catalyst layer 2 are conductive during operation, but when the conductivity of the support 1 declines, the cell voltage rises. Because the catalyst layer 2 possesses an alternating stacked structure of sheet layers 2A and gap layers 2B, the catalyst layer 2 tends to split. By utilizing the properties of the catalyst layer 2 of the electrode 100, separation of the support 1 and the catalyst layer 2 can be reduced. It is preferable that the thickest gap layer 2D, which can serve as a designed initiation point for delamination, be included in catalyst layer 2.

The average porosity of the gap layers 2B is preferably 20 vol% or more and 95 vol% or less, more preferably 30 vol% or more and 80 vol% or less, and still more preferably 40 vol% or more and 70 vol% or less.

The average porosity of the gap layers 2B is preferably 1.1 times or more and 3 times or less than the average porosity of the sheet layers 2A, more preferably 1.3 times or more and 2.5 times or less, and still more preferably 1.5 times or more and 2 times or less.

The average porosity of the gap layers 2B that are located in the first region 2X is preferably 20 vol% or more and 95 vol% or less, more preferably 30 vol% or more and 90 vol% or less, and still more preferably 40 vol% or more and 80 vol% or less.

Accordingly, the thickness of the thickest gap layer 2D having the thickest layer among the gap layers 2B, is preferably 1.1 times or more and 6 times or less than the average thickness of the gap layers 2B, more preferably 1.2 times or more and 3 times or less, and still more preferably 1.3 times or more and 2 times or less.

The gap layers 2B having a thickness that is 1.3 times or more and 8 times or less than the average thickness of the gap layers 2B preferably comprise 1 layer (the gap layer 2D only) or more up to 10 layers, and more preferably 1 layer or more up to 5 layers.

Accordingly, the gap layer 2D having the thickest layer among the gap layers 2B is preferably 10 nm or more and 100 nm or less, more preferably 15 nm or more and 50 nm or less, and still more preferably 20 nm or more and 40 nm or less.

The gap layers 2B which have a thickness of 5 nm or more and 100 nm or less, preferably comprise 1 layer (the gap layer 2D only) or more up to 12 layers, and more preferably 1 layer or more up to 6 layers. The gap layers 2B having a thickness of 5 nm or more and 100 nm or less preferably located in the first region 2X and not in the second region 2Y.

Accordingly, the thickest gap layer 2D is preferably positioned between the outermost gap layer positioned on the farthest from the support 1 and the 12th gap layer counted from the outermost gap layer toward the support 1. More preferably, the thickest gap layer 2D is positioned between the outermost gap layer positioned on the farthest from the support 1 and the 6th gap layer counted from the outermost gap layer toward the support 1. Still more preferably, the thickest gap layer 2D is positioned between the outermost gap layer which is positioned on the farthest from the support 1 and the 4th gap layer counted from the outermost gap layer toward the support 1.

When cracks exist in the catalyst layer 2, a depth to which the electrolyte membrane invades into the electrode 100, varies depending on the width of the cracks. When the electrolyte membrane invades into the cracks, the columnar members 2C that exist in the layers at the position where the electrolyte membrane has been invaded, are more likely to be cut off and detached. Therefore, it is preferable that the thickest gap layer 2D having the thickest thickness among the gap layers 2B is located at a position that matches the size and depth of the cracks. When the cracks exist in the catalyst layer 2, it is preferable that the depth of a crack measured from the surface of the catalyst layer 2 opposite the support 1 to the thickest gap layer 2D is at least as large as the distance from that surface to the thickest gap layer 2D. The position of the thickest gap layer 2D can be adjusted to correspond to unavoidable cracks in the catalyst layer 2.

The thickness of the sheet layer 2A which directly sandwiches the thickest gap layer 2D and is positioned on the support 1 side is set to T1. The thickness of the sheet layer 2A which directly sandwiches the thickest gap layer 2D and is positioned on the side opposite the support 1 is set to T2. From the viewpoint of facilitating separation of the sheet layers 2A on the side opposite the sheet layer 2A which directly sandwiches the thickest gap layer 2D and is positioned on the support 1, it is preferable that T1 and T2 satisfy the following relationships:$\left(T1 + T2\right) / 3 \leq T 1 \leq 2 ⋅ \left(T1 + T2\right) / 3 ,$$\left(T1 + T2\right) / 3 \leq T 1 \leq 2 ⋅ \left(T1 + T2\right) / 3 .$

Moreover, from the same viewpoint, it is preferable that T1 be at least 1 nm thicker than T2, more preferably T1 be between 1 nm and 10 nm thicker than T2, and still more preferably T1 be between 1 nm and 5 nm thicker than T2.

In addition, the gap layers 2B whose thickness is comparable to that of the thickest gap layer 2D can also become initiation points for delamination. The second thickest gap layer having the second thickest thickness among the gap layers 2B is preferably located in the first region 2X, and the second thickest and third thickest gap layers among the gap layers 2B are also preferably located in the first region 2X. The thickness of the second-thickest gap layer among the gap layers 2B is preferably 0.1 times or more and less than the thickness of the thickest gap layer 2D, more preferably 0.15 times or more and 0.9 times or less, and still more preferably 0.3 times or more and 0.8 times or less.

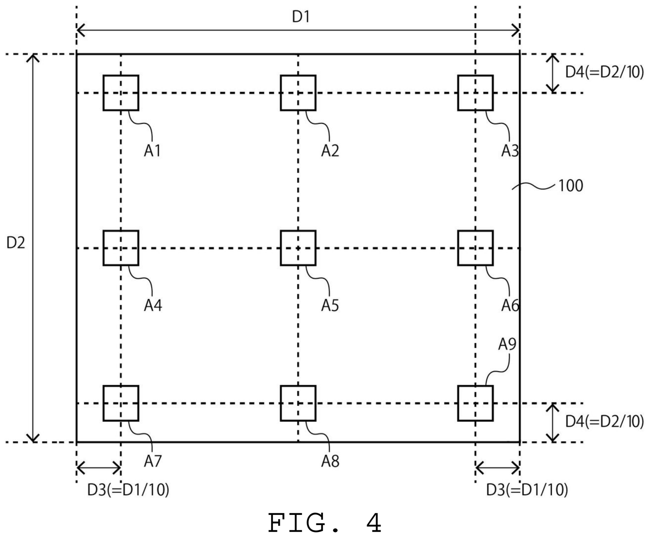

Identification of the sheet layers 2A and the gap layers 2B of the catalyst layer 2, measurement of the thickness of the thickest gap layer 2D, determination of the composition of the sheet layers 2A and the gap layers 2B, and assessment of the cut ratio of the columnar members 2C (ratio of the columnar member 2C which extends in a stacking direction of the sheet layers 2A and do not bridge directly the sheet layers 2A) of the second embodiment are all obtained by observing cross-sections of multiple analysis spots with SEM-EDX or TEM-EDX. As shown in FIG. 4, when the length of electrode 100 is defined as D1 and the width as D2 (D1 ≥ D2), virtual lines are drawn at a distance D3 (= D1 / 10) inward from each of the two opposing sides in the width direction, and virtual lines are drawn at a distance D4 (= D2 / 10) inward from each of the two opposing sides in the length direction. Furthermore, a virtual line parallel to the width direction passing through the center of electrode 100 and a virtual line parallel to the length direction passing through the center are drawn. The nine intersection points of these virtual lines define the analysis spot regions A1 through A9. Each spot is square-shaped and has an area of at least 1 µm². Images of each spot may be mosaic images formed by stitching together multiple raster images. The observation cross-sections obtained by SEM-EDX or TEM-EDX are taken perpendicular to the plane of FIG. 1 and parallel to the width direction. The thicknesses of the sheet layers 2A and each gap layer 2B within analysis spots A1 through A9 are measured at 50 nm intervals along the width direction. The average of the sheet-layer thicknesses obtained at 50 nm intervals constitutes the thickness of a single sheet layer 2A, and the average of the gap-layer thicknesses obtained at 50 nm intervals constitutes the thickness of a single gap layer 2B.

Next, an example of a manufacturing method of the electrode 100 is described. On the support 1, the precursor of the sheet layers 2A (the sheet-layer precursor) and the precursor of the gap layers 2B (the gap-layer precursor) are alternately deposited by sputtering, thereby forming the alternating stack. During this process, the sputtering time for the gap-layer precursor that will become the single gap layer 2B on the side opposite the support 1 (the thickest gap layer 2D) is made longer so that this particular gap layer becomes thicker. Both the sheet-layer precursor and the gap-layer precursor are formed under an oxidizing atmosphere. After deposition, the stacked body composed of alternating sheet-layer and gap-layer precursors is treated with a solution that selectively dissolves the oxides that are primarily contained in the gap-layer precursor. Representative solutions for the dissolving include sulfuric acid, hydrochloric acid, or nitric acid. After the solution treatment, the stack may optionally be heat-treated in an oxidizing atmosphere to obtain electrode 100.

In the embodiment, the average thickness of the gap layers 2B located in the first region 2X is greater than the average thickness of the gap layers 2B located in the second region 2Y, and/or the thickest gap layer 2D is located within the first region 2X; these features enable reduction of degradation of the catalyst layer 2.

### (SECOND EMBODIMENT)

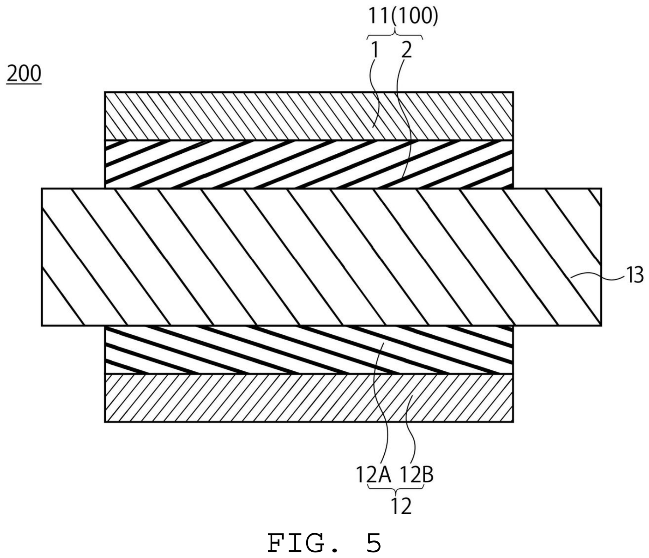

A second embodiment relates to a membrane-electrode assembly (MEA). FIG. 5 shows a schematic diagram of a membrane electrode assembly 200 according to the embodiment. The membrane electrode assembly 200 comprises a first electrode 11, a second electrode 12, and an electrolyte membrane 13. The first electrode 11 is preferably an anode electrode, and the second electrode 12 is preferably a cathode electrode. It is preferable to use the electrode 100 of the first embodiment as either the first electrode 11 or the second electrode 12. The embodiment membrane electrode assembly 200 is preferably employed in an electrochemical cell or stack that performs hydrogen generation or oxygen generation.

The first electrode 11 includes a first support and a first catalyst layer. The first catalyst layer is provided on the first support. It is preferable that the first catalyst layer be in direct contact with the electrolyte membrane 13. When electrode 100 is used as the first electrode 11, the first catalyst layer corresponds to catalyst layer 2 and the first support corresponds to the support 1.

In the membrane electrode assembly 200, when pressure is applied for electrolysis operation, pressure is applied to both the first electrode 11 and the second electrode 12, and when the operation stops, the pressure returns to atmospheric pressure. During electrolysis shutdown, dry air may be supplied to the anode. Such pressure differences and drying cause dimensional changes in the membrane electrode assembly 200, leading to partial delamination of catalyst layer 2. Even when delamination occurs, the applied pressure during operation ensures that the delaminated catalyst remains electrically connected to support 1. By using the electrode 100, delamination at the interface between support 1 and catalyst layer 2 caused by volume changes due to pressure differences or drying can be reduced.

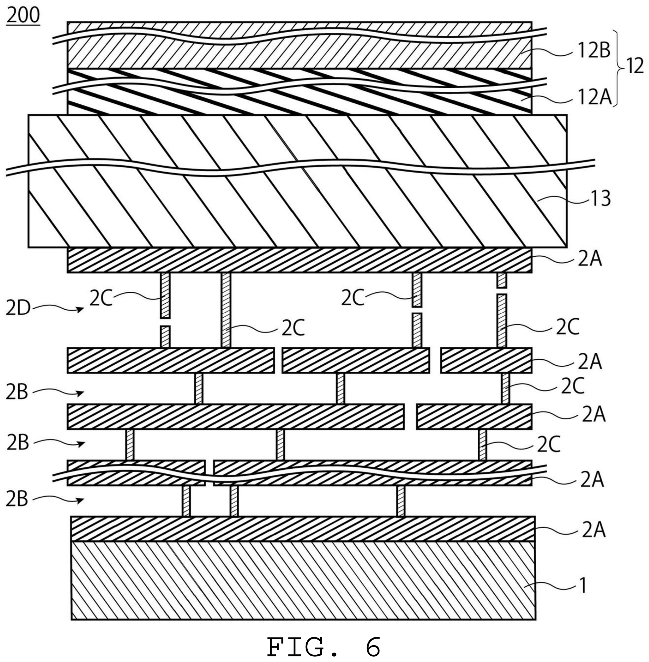

As illustrated in the schematic diagram of the membrane electrode assembly 200 in FIG. 6, during volume changes the gap layer 2D of electrode 100 delaminates, thereby reducing degradation of electrode 100. After repeated electrolysis-on/off cycling, the columnar members 2C in the gap layer 2D are cut. The cut ratio of the columnar members 2C (ratio of the columnar member 2C which extends in a stacking direction of the sheet layers 2A and do not bridge directly the sheet layers 2A) in the thickest gap layer 2D is preferably higher than the average cut ratio of the columnar members 2C in all gap layers 2B. The average cut ratio of the columnar members 2C in all gap layers 2B is preferably 20 % or more and 10000 % or less, more preferably 50 % or more and 1000 % or less, and still more preferably 100 % or more and 500 % or less. The average cut ratio of the columnar members 2C in all gap layers 2B is preferably 110 % or more and 10000 % or less, more preferably 120 % or more and 1000 % or less, and still more preferably 130 % or more and 500 % or less. The cut ratio of the columnar members 2C in the thickest gap layer 2D and other layers is determined by observing cross-sectional SEM images, measuring the overall density ρ1 of columnar members 2C in all gap layers 2B (average number of columnar members per 1 µm width of the cross-section), and the density ρ2 of columnar members 2C in the thickest gap layer 2D (average number of columnar members per 1 µm width of the gap layer 2D). The ratio ρ1 / ρ2 represents the cut ratio of the columnar members 2C in the thickest gap layer 2D (In this case, the average cut ratio of the columnar members 2C in all gap layers 2B is regarded as 1.)

The second electrode 12 comprises a second support 12B and a second catalyst layer 12A. The second catalyst layer 12A is provided on the second support 12B. The second catalyst layer 12A is positioned toward the electrolyte membrane 13, and it is preferable that the second catalyst layer 12A be in direct contact with the electrolyte membrane 13.

The second support 12B preferably consists of a highly conductive porous material. The second support 12B is a porous member through which gas or liquid can pass. Examples of second support 12B include carbon paper or a metal mesh. For metal meshes, a porous valve-metal support is preferable. Porous valve-metal supports may be based on one or more metals selected from the group consisting of titanium, aluminum, tantalum, niobium, hafnium, zirconium, zinc, tungsten, bismuth, and antimony, or may be a porous support made of a single metal selected from the same group. The second support 12B may also include a carbon layer (MPL layer) that includes carbon particles and a water-repellent resin (e.g., PTFE or Nafion fluoropolymer). The carbon layer is, for example, positioned between the carbon paper and the second catalyst layer 12A.

The second catalyst layer 12A includes a catalytic metal. It is preferable that the catalytic metal particles be supported on a carbon-based carrier. The second catalyst layer 12A is preferably a porous catalytic layer. Catalytic metals are not limited but may include one or more selected from the group consisting of Pt, Rh, Os, Ir, Pd, and Au. The catalytic metal may be a metal, an alloy, or a metal oxide. It is preferable that the second catalyst layer 12A comprise multiple catalyst units in which sheet layers and gap layers are alternately stacked.

The metal loading of the second catalyst layer 12A per unit area is preferably 0.02 mg/cm² or more and 1.0 mg/cm² or less, more preferably 0.05 mg/cm² or more and 0.5 mg/cm² or less. This total mass can be measured by ICP-MS.

The porosity of the second catalyst layer 12A is preferably 10 vol % or more and 90 vol% or less, and more preferably 30 vol% or more and 70 vol% or less.

The electrolyte membrane 13 is preferably a proton-conducting membrane. Suitable electrolyte membrane 13 is fluorinated polymers or aromatic hydrocarbon polymers that contain one or more groups selected from sulfonic-acid groups, sulfonimide groups, and sulfate groups. Fluorinated polymers containing sulfonic-acid groups are especially preferred for the electrolyte membrane 13. Examples include Nafion (DuPont), Flemion (Asahi Kasei), Selemion (Asahi Kasei), Aquivion (Solvay Specialty Polymers), and Aciplex (Asahi Glass). In some cases, the proton-conducting membrane may be replaced by an anion-exchange membrane, a porous membrane, or other conductive membranes.

The thickness of the electrolyte membrane 13 is determined as appropriate based on its permeation characteristics, durability, and other performance considerations. From the viewpoints of strength, solvent resistance, and MEA output performance, the thickness of the electrolyte membrane 13 is preferably 20 µm or more and 500 µm or less, more preferably 50 µm or more and 300 µm or less, and still more preferably 80 µm or more and 200 µm or less.

It is preferable that the side of electrolyte membrane 13 facing the first electrode 11 has a noble-metal region. The noble-metal region comprises noble-metal particles and is preferably located on the surface of electrolyte membrane 13. The noble-metal region preferably includes of a single contiguous region, although multiple separated regions are also acceptable.

The noble metal particles are preferably particles of noble metal selected from the group consisting of Pt, Re, Rh, Ir, Pd, and Ru. The noble metal particles may also be alloy particles including one or more noble metals selected from the group consisting of Pt, Re, Rh, Ir, Pd, and Ru. Preferred noble-metal particles are Pt particles. Preferred noble-metal particles are Re particles. Preferred noble-metal particles are Rh particles. Preferred noble-metal particles are Ir particles. Preferred noble-metal particles are Pd particles. Preferred noble-metal particles are Ru particles.

The noble metal particles oxidize hydrogen that passes through the electrolyte membrane 13 from the cathode side, thereby reducing hydrogen leakage. Because the noble metal particles are located on the anode side, they make it difficult for hydrogen generated at the cathode to be oxidized. The region including the noble metal particles may also be present on the electrolyte membrane side facing the second electrode 12 (cathode).

The average outer circumferential diameter of the noble-metal particles is preferably 0.5 nm or more and 50 nm or less, more preferably 1 nm or more and 10 nm or less, and still more preferably 1 nm or more and 5 nm or less.

By employing the high-durability, high-performance electrode 100 as the anode of the membrane electrode assembly 200, long-duration operation with high activity becomes possible.

### (THIRD EMBODIMENT)

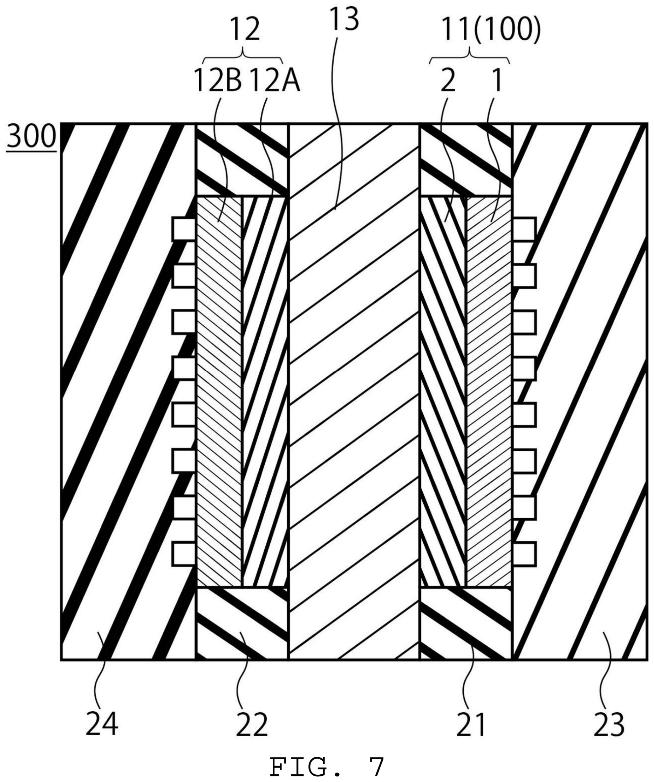

A third embodiment relates to an electrochemical cell. FIG. 7 shows a cross-sectional diagram of an electrochemical cell 300 of the third embodiment. While the description below uses water electrolysis as an example, the cell can also generate hydrogen by decomposing substances other than water, such as ammonia.

As shown in FIG. 7, the electrochemical cell 300 of the third embodiment comprises the first electrode (anode) 11, the second electrode (cathode) 12, the electrolyte membrane 13, gaskets 21 and 22, a separator 23, and a separator 24. The gasket 21 may be a sealing member for the first electrode 11, and the gasket 22 may be a sealing member for the second electrode 12.

It is preferable to use the membrane electrode assembly 200 in which the first electrode 11, the second electrode 12, and the electrolyte membrane 13 are joined. An anode current collector may be provided separately from the separator 23, and a cathode current collector may be provided separately from the separator 24.

In the electrochemical cell 300 of FIG. 7, a power source (not shown) is connected to the separators 23 and 24, causing reactions to occur at the first electrode 11 and the second electrode 12. For example, water is supplied to the first electrode 11, where water is decomposed into protons, oxygen, and electrons. Both the electrode support and the current collector are porous bodies that function as flow plates. The generated water and unreacted water are discharged, while the protons and electrons are utilized at the cathode reaction, where they combine to form hydrogen. The produced hydrogen and/or oxygen may be used, for example, as fuel for a fuel cell and an engine.

### (FOURTH EMBODIMENT)

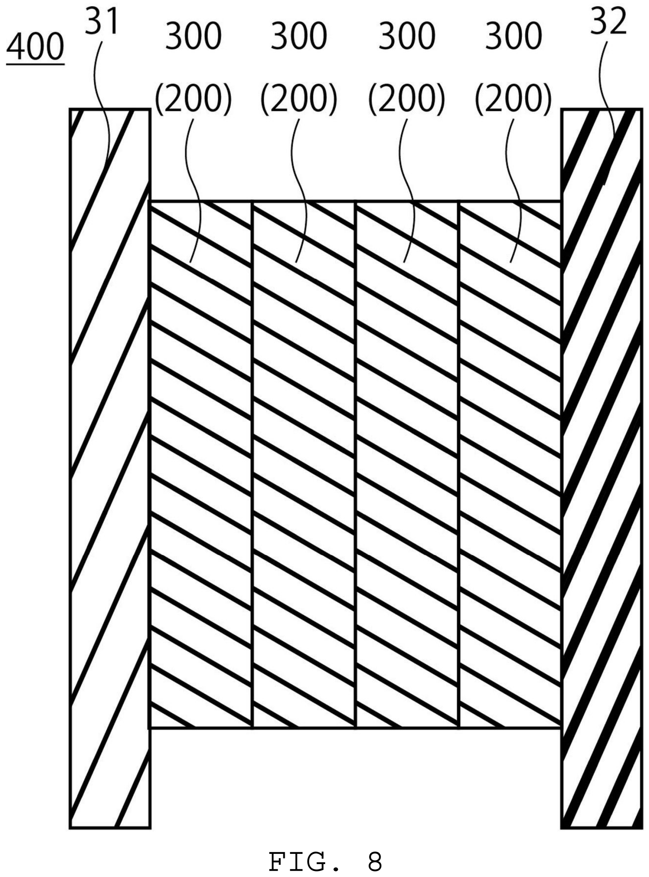

A fourth embodiment relates to a stack. FIG. 8 is a schematic cross-sectional diagram of a stack 400 according to the fourth embodiment. The stack 400 shown in FIG. 8 comprises multiple MEAs 200 or electrochemical cells 300 connected in series. Tightening plates 31 and 32 are attached to both ends of the MEAs or electrochemical cells.

Because a single electrochemical cell 300 having one MEA 200 generates only a small amount of hydrogen, connecting multiple MEAs 200 or multiple electrochemical cells 300 in series to form stack 400 enables the production of a large quantity of hydrogen.

### (FIFTH EMBODIMENT)

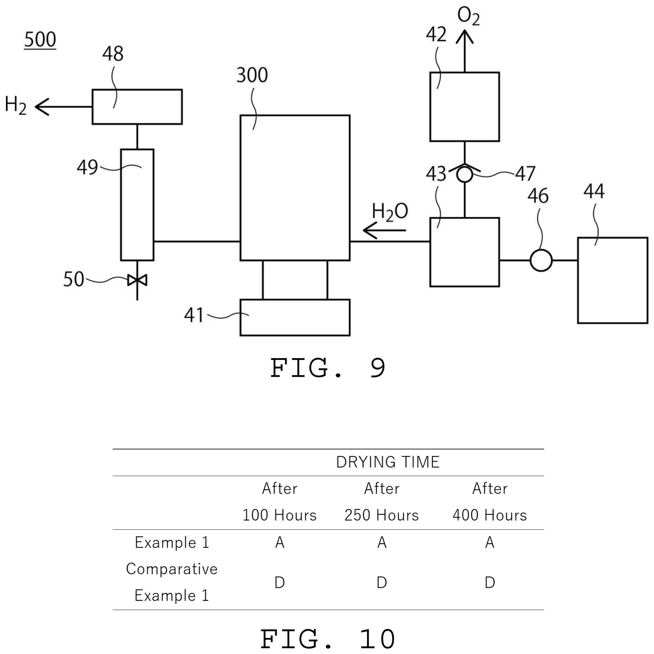

A fifth embodiment relates to an electrolyzer. The electrolyzer may be, for example, a PEM-type (Polymer Electrolyte Membrane) water electrolyzer (PEMEC). FIG. 9 shows a conceptual diagram of the electrolyzer of the fifth embodiment. The electrolyzer 500 comprises the electrochemical cell 300 or the stack 400. The electrolyzer of FIG. 9 is intended for water electrolysis. When hydrogen is to be generated from ammonia, it is preferable to adopt a different configuration that uses electrode 100. The electrode of the embodiment can also be employed in electrolyzers that electrolyze carbon dioxide to produce organic compounds such as methanol or ethylene, or carbon monoxide.

As shown in FIG. 9, the stack 400 having stacked water electrolysis cells (electrochemical cells), is used. The stack 400 is equipped with a power source 41 that applies voltage between the anode and the cathode. On the anode side of the stack 400, a gas-liquid separation device 42 and a mixing tank 43 are connected to separate the generated gas from unreacted water. Water is supplied to mixing tank 43 from an ion-exchange water production device 44 via pump 46, and water is circulated back to the anode through a check valve 47 after passing through the gas-liquid separator 42. Oxygen generated at the anode passes through the gas-liquid separator 42 and is collected as oxygen gas. On the cathode side, a hydrogen purification device 49 is continuously connected to a gas-liquid separator 48, producing high-purity hydrogen. Impurities are discharged through a valve 50 that is in the line connected to the hydrogen purification device 49. The stack and mixing tank may be heated, and current density during thermal decomposition may be controlled in order to maintain a stable operating temperature.

The invention will be described in more detail with reference to the examples, but the invention is not limited to the following examples.

### (EXAMPLE 1)

A non-woven fabric of titanium metal fibers is used as the support, and a catalyst layer is formed on the support. The catalyst layer comprised an alternating stack of sheet layers and gap layers, each consisting of 40 layers. Sheet-layer precursor including Ir oxide and gap-layer precursor containing Ni oxide are alternately sputtered in an oxidizing atmosphere to form 40 alternating layers of the sheet-layer precursor and the gap-layer precursor. Among the 40 gap-layer precursors, the one located farthest from the support side is made four times thicker than the other gap-layer precursors. The noble-metal loading density of the electrode is set to 0.15 mg/cm². Subsequently, most of the gap-layer precursor is selectively dissolved with sulfuric acid to obtain the embodiment electrode, which is then used as an anode.

Carbon paper is used as the support, and a porous catalyst layer containing Pt was formed on the support to obtain an electrode, which is used as a cathode. The noble-metal loading density was set to 0.2 mg/cm².

The obtained anode and cathode are sandwiched with a Nafion membrane as the electrolyte membrane and hot-pressed to obtain a membrane electrode assembly. The resulting membrane electrode assembly is placed between two of flow-channel separators, sealed with gaskets, and fixed to obtain an electrochemical cell. An acceleration test was performed using the obtained electrochemical cell. The test conditions are: temperature 80 °C, current density 2 A/cm², and a pressure difference (pressure of the fluid flowing in the cathode separator's flow channel minus pressure of the fluid flowing in the anode separator's flow channel) of 8 atm. First, water electrolysis is carried out under these conditions before drying, and the cell voltage is measured. After water electrolysis, the anode and cathode are returned to atmospheric pressure, and as an acceleration test, dry air (relative humidity 0 %, 25 °C) is supplied to the anode to dry it. Cell voltages were measured after approximately 100 h, approximately 250 h, and approximately 400 h from the start of drying. The increase rate of the cell voltage from the start of drying to each measured time point is then evaluated.

The increase rate of the cell voltage for Example 1, is defined as ([Cell voltage after each time interval] - [Cell voltage at start of operation]) / [Cell voltage at start of operation]). When the increase rate of the cell voltage is 0 % or more and less than 1 %, the increase rate is classified as "A". When the increase rate of the cell voltage is 1 % or more and less than 3 %, the increase rate is classified as "B". When the increase rate of the cell voltage is 3 % or more and less than 5 %, the increase rate is classified as "C". When the increase rate of the cell voltage is 5 % or more, the increase rate is classified "D".

### (COMPARATIVE EXAMPLE 1)

For an anode of Comparative Example 1, sheet-layer precursor and gap-layer precursor are alternately stacked so that all gap-layer precursors of Comparative Example 1 have the same thickness. The anode of Comparative Example 1 is fabricated in the same manner of Example 1 except the thickness of the gap-layer precursor and the gap layers. The fabricated anode is then used to construct an electrochemical cell, and cell voltage is measured under the same conditions as Example 1.

The increase rates of the cell voltage for Example 1 and Comparative Example 1 are summarized in the table of FIG. 10. Example 1 exhibited a very low increase rate and maintained an "A" evaluation even after a long time. In contrast, Comparative Example 1 showed a noticeable increase in cell voltage after the start of drying, as shown in the table. By placing the thickest gap layer 2D on the electrolyte-membrane side, the increase in cell voltage is reduced. Even when the thickness of gap layer 2D is varied within the preferred range, the increase in cell voltage could still be reduced. Moreover, when the position of gap layer 2D is changed within the first-region range, the increase in cell voltage remains reduced.

In addition to the acceleration test, a long-term continuous water-electrolysis test is performed at atmospheric pressure under the same current density (2 A/cm²) for 5000 hours using the anodes from Example 1 and Comparative Example 1 in separate electrochemical cells. After the continuous operation, the cell voltage of the electrochemical cell using the Example 1 anode remained low and retained an "A" evaluation, whereas the cell using the Comparative Example 1 anode fell to a "B" evaluation. Thus, even under normal water-electrolysis operation, the anode of Example 1 demonstrated improved durability.

Some elements are expressed only by element symbols thereof.

While certain embodiments have been described, these embodiments have been presented by way of example only, and are not intended to limit the scope of the inventions. Indeed, the novel embodiments described herein, for example, PEMEC as a water electrolysis cell may be embodied in a variety of other forms; furthermore, various omissions, substitutions and changes in the form of the embodiments described herein may be made without departing from the spirit of the inventions. The accompanying claims are intended to cover such forms or modifications as would fall within the scope and spirit of the inventions.

## Claims

1. An electrode (100) comprising:
a first support (1); and
a first catalyst layer (2) provided on the first support (1), the first catalyst layer (2) having a plurality of alternately stacked sheet layers (2A) and gap layers (2B), wherein
the side of the first catalyst layer (2A) opposite the first support (1) defines a first region (2X) and the region of the catalyst layer (2) other than the first region (2X) defines a second region (2Y),
either the average thickness of the gap layers (2B) located in the first region (2X) is greater than the average thickness of the gap layers (2B) located in the second region (2Y) or the thickest gap layer (2D) having the thickest thickness among the gap layers (2B) is located in the first region (2X), or both.

2. The electrode (100) according to claim 1, wherein
a thickness of the first region (2X) is 10 % or more and 30 % or less of the total thickness of the first catalyst layer (2).

3. The electrode (100) according to claim 1 or 2, wherein
a thickness of the first region (2X) is 10 % or more and 20 % or less of the total thickness of the first catalyst layer (2).

4. The electrode (100) according to any one of claims 1 to 3, wherein
an average porosity of the gap layers (2B) is 1.1 times or more and 3 times or less than an average porosity of the sheet layers (2A).

5. The electrode (100) according to any one of claim 1 to 4, wherein
the first catalyst layer (2) comprises one or more first elements selected from the group consisting of Ir, Ru, Pt, and Pd.

6. The electrode (100) according to any one of claim 1 to 5, wherein
an average thickness of the gap layers (2B) is 5 nm or more and 200 nm or less,
the average thickness of the gap layers (2B) in the first region (2X) is 1 nm or more and 25 nm or less, and
the average thickness of the gap layers (2B) in the second region (2Y) is 1 nm or more and 20 nm or less.

7. The electrode (100) according to claim 6, wherein
a thickness of the thickest gap layer (2D) is 1.1 times or more and 6 times or less than the average thickness of the gap layers (2B).

8. The electrode (100) according to claim 7, wherein
the thickness of the thickest gap layer (2D) is 10 nm or more and 100 nm or less.

9. The electrode (100) according to any one of claims 1 to 8, wherein
the average thickness of the gap layers (2B) in the first region (2X) is 1.1 times or more and 8 times or less than the average thickness of the gap layers (2B) in the second region (2Y).

10. The electrode (100) according to any one of claims 1 to 9, wherein
the thickest gap layer (2D) is positioned between the outermost gap layer positioned on the farthest from the first support (1) and the 12th gap layer counted from the outermost gap layer toward the first support (1).

11. The electrode (100) according to any one of claim 3 to 10, wherein
an average porosity of the gap layers (2B) is 20 vol% to 95 vol%, and
an average porosity of the gap layers (2B) in the first region is 20 vol% to 95 vol%.

12. The electrode (100) according to any one of claims 1 to 11, wherein
the second thickest gap layer having the second thickest thickness among the gap layers (2B) is located in the first region (2X), and
a thickness of the second thickest gap layer is 0.1 times or more and less than a thickness of the thickest gap layer (2D).

13. The electrode (100) according to any one of claims 1 to 12, wherein
a thickness of the sheet layer (2A) which directly sandwiches the thickest gap layer (2D) and is positioned on the first support (1) side, is set to T1,
a thickness of the sheet layer (2) which directly sandwiches the thickest gap layer (2D) and is positioned on the side opposite the first support (1), is set to T2,
T1 and T2 satisfy (T1 + T2)/3 ≤ T1 ≤ 2·(T1 + T2)/3, and (T1 + T2)/3 ≤ T2 ≤ 2·(T1 + T2)/3, and
T1 is at least 1 nm thicker than T2.

14. A membrane electrode assembly (200) comprising:
the electrode (100) according to any one of claims 1 to 13 as a first electrode (11);
a second electrode (12) comprising a second support (12B) and a second catalyst layer (12A); and
an electrolyte membrane (13) provided between the first electrode (11) and the second electrode (12).

15. The membrane electrode assembly (200) according to claim 14, wherein
the gap layers (2B) are sandwiched between the sheet layers (2A),
the gap layers (2B) comprise columnar members (2C) connecting the sheet layers (2A),
the cut ratio of the columnar members (2C) in the thickest gap layer (2D) is higher than the average cut ratio of the columnar members (2C) in all gap layers (2B).
